**Europäisches Patentamt**

**European Patent Office**

**Office européen des brevets**

(19)

(11) Veröffentlichungsnummer : **0 152 750
B1**

(12) **EUROPÄISCHE PATENTSCHRIFT**

(45) Veröffentlichungstag der Patentschrift :
08.07.87

(51) Int. Cl.⁴ : **F 01 N 7/10**

(21) Anmeldenummer : **85100286.5**

(22) Anmeldetag : **12.01.85**

(54) **Abgassystem für eine mehrzylindrige Brennkraftmaschine.**

(30) Priorität : **18.02.84 DE 3405955**

(43) Veröffentlichungstag der Anmeldung :
**28.08.85 Patentblatt 85/35**

(45) Bekanntmachung des Hinweises auf die Patenterteilung : **08.07.87 Patentblatt 87/28**

(84) Benannte Vertragsstaaten :
**CH DE FR IT LI NL SE**

(56) Entgegenhaltungen :
**DE-A- 2 936 377
DE-B- 2 609 851
FR-A- 2 411 963**

(73) Patentinhaber : **Klöckner-Humboldt-Deutz Aktiengesellschaft
Deutz-Mülheimer-Strasse 111 Postfach 80 05 09
D-5000 Köln 80 (DE)**

(72) Erfinder : **Bauer, Lothar
Am Hirschsprung 2
D-5000 Köln 91 (DE)**

**Beschreibung**

Die Erfindung bezieht sich auf ein Abgassystem für eine mehrzylindrige Brennkraftmaschine mit in Reihe angeordneten, einzelnen Zylinderköpfen, an die sich vom Kühlwasser der Brennkraftmaschine gekühlte Abgaskrümmer anschließen, die innerhalb eines diesen umgebenden Mantels je einen Kühlwassersammelraum bilden, welche durch Rohrstücke mit Steckanschlüssen zu einer Kühlwassersammelleitung verbunden sind, wobei den vom Mantel umgebenden Raum Leitungsabschnitte für andere Versorgungsleitungen durchsetzen, die ebenfalls durch angeschlossene Rohrstücke miteinander zu durchgehenden Leitungen verbunden sind.

Es ist aus der DE-A-29 36 377 ein Abgassystem obengenannter Art bekannt, bei dem die Abgaskrümmer entsprechend der Anordnung der Zylinder nebeneinander in Reihe liegen. Durch den Bereich jedes Kühlwassersammelraumes, der an jedem der Abgaskrümmer zwischen diesen und dem umhüllenden Mantel vorhanden ist, verlaufen mehrere Versorgungsleitungen, z. B. eine Ladeluftleitung, eine Anlaßluftleitung u. a. Die den Mantel jedes Abgaskrümmers durchsetzenden Versorgungsleitungen sind durch Rohrstücke und dichtende Steckelemente miteinander verbunden. Hierdurch wird einerseits die Demontage eines Abgaskrümmers zur Verrichtung von Arbeiten am entsprechenden Zylinder der Brennkraftmaschine wesentlich vereinfacht. Allerdings können solche Arbeiten wieder dadurch erschwert werden, daß im Bereich der Abgaskrümmer noch die Leitung für den Ölrücklauf von den Einzelzylindern liegt, die vor der Demontage des entsprechenden Abgaskrümmers in umständlicher Weise entfernt werden muß. Durch die Anordnung einer Vielzahl von Versorgungsleitungen bzw. Sammelräumen für die Leitungen im Kühlwasserraum des Abgaskrümmers sowie deren Verbindungen durch Rohrstücke sowie dichtende Steckelemente zwischen den einzelnen Abgaskrümmern ergeben sich bei maximaler Belastung insbesondere durch flüssige Medien erhebliche Gewichtsprobleme für die Abgaskrümmer.

Der Erfindung liegt die Aufgabe zugrunde, die vorstehend genannten Schwierigkeiten zu vermeiden und ein Abgassystem der eingangs umrissenen Gattung zu schaffen, bei dem trotz einer Vielzahl von Versorgungsleitungen für die Zylinder eine möglichst einfache Montage bzw. Demontage der Abgaskrümmer möglich ist. Bei einem solchen Abgassystem soll ferner die durch die Unterbringung der Versorgungsleitungen in den Kühlwassersammelräumen der Abgaskrümmer vergrößerte Belastung derselben in angemessener Weise berücksichtigt werden.

Die Aufgabe wird erfindungsgemäß gelöst durch die Kombination folgender Merkmale :

a) jeder Abgaskrümmer hat in seinem Mantel einen Sammelraum für das vom Zylinderkopf ablaufende Öl ;

b) die Sammelräume bilden mit den diese miteinander verbindenen Rohrstücken die Ölsammelleitung ;

c) der Ölsammelraum ist durch eine Bohrung o. dgl. unmittelbar mit dem Ventilraum im Zylinderkopf verbunden ;

d) die die Rohrstücke der Ölsammelleitung aufnehmenden Steckflansche sind mit Stützelementen für den Abgaskrümmer und das anschließende Abgassystem versehen, die mit dem Kurbelgehäuse starr oder elastisch verbunden sind und

e) als Ölrückführung zum Kurbelgehäuse dienen die am ersten und letzten Abgaskrümmer einer Zylinderreihe angeordneten Stützelemente, die hohl ausgebildet sind.

Hierdurch wird bei der Demontage beispielsweise eines einzelnen Zylinderkopfes erreicht, daß alle zur Versorgung des Zylinderkopfes über dessen Abgaskrümmer angeschlossenen Leitungen durch Lösen der Steckanschlüsse leicht getrennt werden können. Es entfällt somit ein aufwendiger Abbau einzelner Versorgungsleitungen über einen größeren Bereich der Maschine. Dies ist an solchen Stellen besonders vorteilhaft, wo die Bewegungsfreiheit bei der Montage sehr begrenzt ist. Dabei sorgen die an den Steckflanschen der Ölsammelleitung angreifenden Stützelemente für eine zusätzliche, dem erhöhten Gewicht der Abgaskrümmer angemessene Abstützung.

Ein Ausführungsbeispiel der Erfindung wird im folgenden anhand der Zeichnung näher beschrieben. Es zeigt :

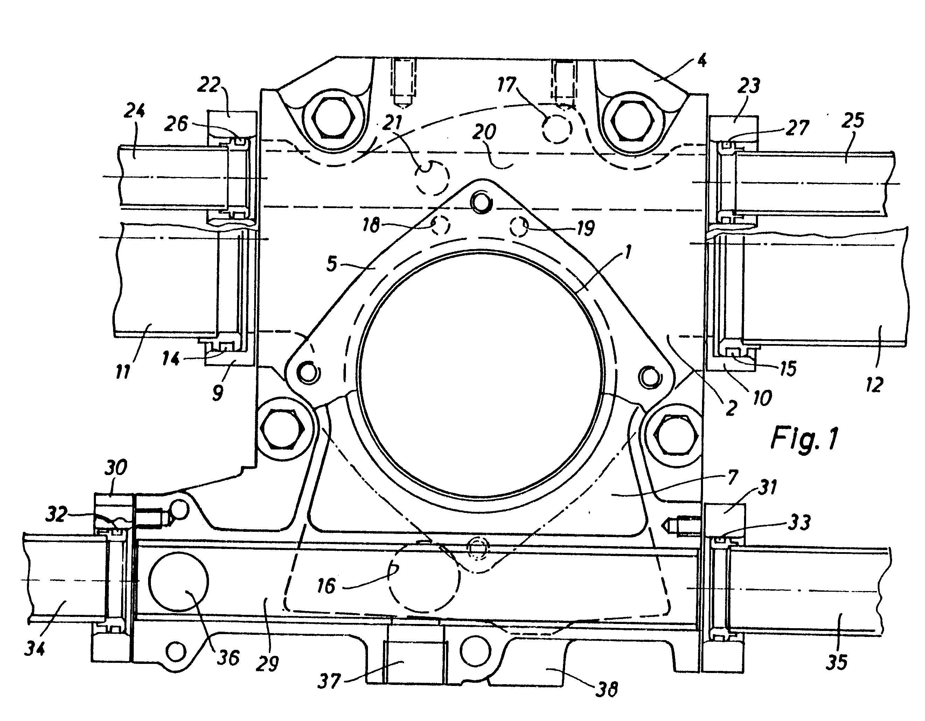

Figur 1 eine Vorderansicht eines Abgaskrümmers gemäß der Erfindung ;

Figur 2 eine Seitenansicht eines Abgaskrümmers mit Abstützung am Kurbelgehäuse.

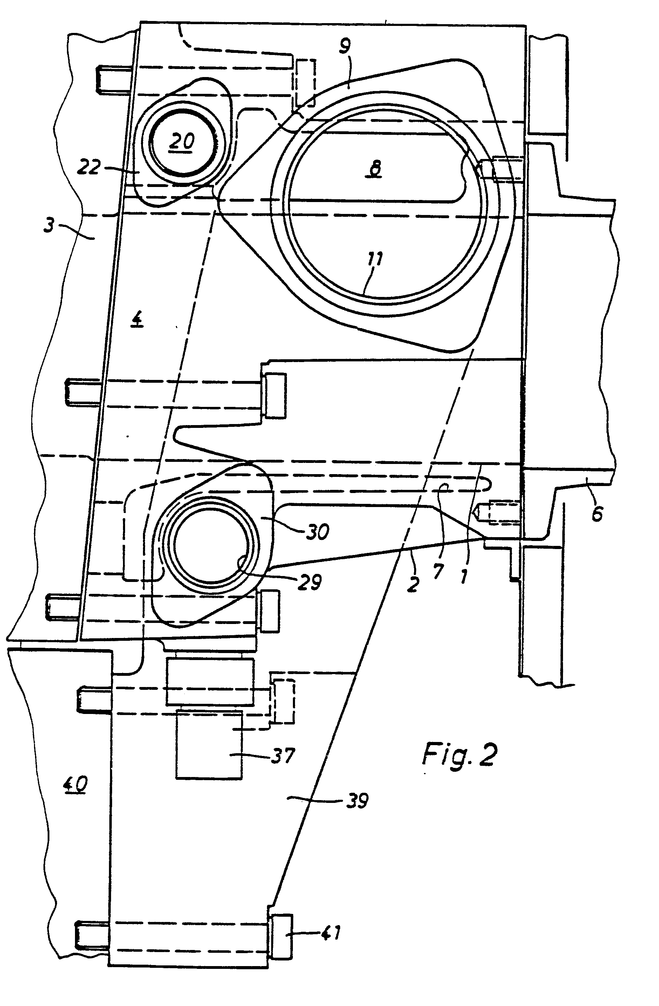

Der gezeigte Abgaskrümmer 1 einer Brennkraftmaschine weist einen wassergekühlten Mantel 2 auf, der zum Anschluß an einen Einzelzylinderkopf 3 der Brennkraftmaschine an seinem dieser zugewandten Ende 4 flanschartig ausgebildet ist. Ein an der Vorderseite des Abgaskrümmers 1 angeordneter Flansch 5 dient zum Anschluß einer weiterführenden Abgasleitung 6. Innerhalb des Mantels 2 ist ein den Abgaskrümmer 1 umschließender Raum 7 vorgesehen, der an den Kühlwasserstrom der Brennkraftmaschine angeschlossen ist. Oberhalb des Abgaskrümmers 1 befindet sich im Mantel 2 ein Kühlwassersammelraum 8 (Fig. 2), der mit dem Raum 7 in Verbindung steht und beiderseits des Abgaskrümmers 1 bzw. des Mantels 2 Flansche 9 und 10 für Rohr-Steckanschlüsse aufweist. In die Flansche 9 und 10 greift je ein Rohrstück 11 bzw. 12 ein, die an ihren in die Flansche 9, 10 eingreifenden Enden mit Steckdichtungen 14 bzw. 15 versehen sind. Die Rohrstücke 11, 12 verbinden den Kühlwassersammelraum 8 des Abgaskrümmers 1 mit den entsprechenden Kühlwassersammelräumen benachbarter Abgaskrümmer, die hier nicht dargestellt sind. Durch die Verbindung aller Kühlwassersammelräume der an der Brennkraftmaschine vorhandenen Abgaskrümmer durch Rohrstücke der genannten Art wird die Kühlwassersammelleitung gebildet, die die Weiter- und Rückführung des Kühlwassers übernimmt. In den kühlwasserführenden Räumen 7 und 8 münden mehrere Kanäle 16, 17, 18 und 19, von denen der erstgenannte Kanal 16 als Kühlwasserrücklauf aus dem Zylinderkopf 3 dient. Der Kanal 17 führt das Kühlwasser von den Auslaßventilkörben zum Kühlwassersammelraum 8 zurück, während mit 18 und 19 zwei zum Zylinderkopf 3 führende Entdampfungsbohrungen bezeichnet sind.

Nahe am Kühlwassersammelraum 8 befindet sich im Mantel 2 des Abgaskrümmers 1 ein rohrförmiger Sammelraum 20 für Öl, das durch eine den Ventilraum des Zylinders 3 mit dem Sammelraum 20 verbindende Bohrung 21 in diesen gelangt. Beiderseits des Sammelraumes 20 ist am Mantel 2 je ein Steckflansch 22 bzw. 23 angeordnet, die zum Anschluß von Rohrstücken 24 bzw. 25 dienen. Die Rohrstücke 24, 25 greifen mit Steckdichtungen 26 bzw. 27 sowohl in die Steckflansche 22 bzw. 23 am Ölsammelraum 20 als auch in die entsprechenden Steckflansche am Ölsammelraum (nicht dargestellt) benachbarter Abgaskrümmer ein und bilden mit diesen gemeinsam die Ölsammelleitung, die das im Kreislauf befindliche Öl zum Sumpf zurückführt.

Ferner ist in den Mantel 2 im unteren Bereich des Abgaskrümmers 2 ein Rohrstück 29 eingegossen, das beiderseits des Mantels 2 ebenfalls mit je einem Steckflansch 30 bzw. 31 versehen ist. Die beiden Steckflansche 30 und 31 dienen unter Zwischenschaltung von Steckdichtungen 32 bzw. 33 zum Anschluß von Rohrstücken 34 bzw. 35, welche das Rohrstück 29 über ebensolche Steckverbindungen mit entsprechend eingegossenen Rohrstücken in den benachbarten Abgaskrümmern bzw. deren Mantel verbinden. Die in dieser Weise zuammengefügten Rohrstücke bilden eine geschlossene Leitung, die als Anlaßluftleitung dient und als solche mit einer Druckluftquelle sowie einem Anlaßventil in Verbindung steht. Die Zuführung der Anlaßluft zu den Anlaßventilen im Zylinderkopf 3 erfolgt durch eine Bohrung 36, die vom Rohrstück 29 durch den Mantel 2 unmittelbar zum Zylinderkopf 3 führt. An das Rohrstück 29 kann bei Bedarf ein mit Gewinde versehener Stutzen 37 angeschlossen sein, der beispielsweise ein Sicherheitsventil aufnehmen kann. An der tiefsten Stelle des kühlwasserführenden Raumes 7 ist zur Entwässerung des Abgaskrümmers 1 sowie der Wasserräume des Zylinderkopfes 3 eine Ablaßschraube 38 angeordnet.

Nach Fig. 2 ist der Steckflansch 9 als Stützelement 39 ausgebildet, das sich bis zum Kurbelgehäuse 40 hin erstreckt und an diesem mittels Schrauben 41 verspannt ist. Alle Steckflansche der Kühlwassersammelleitung sind in dieser Weise zusätzlich am Kurbelgehäuse 40 abgestützt, um die zu tragenden Lasten des Abgassystems sicher abzufangen. Selbstverständlich können in dieses tragende System auch die Steckflansche 22, 23 der Ölsammelleitung mit einbezogen werden. Eine andere Möglichkeit zur zusätzlichen Abstützung des Abgassystems besteht darin, nur die Steckflansche 22, 23 der Ölsammelleitung an den Abgaskrümmern für die zusätzliche Abstützung des Abgassystems zu verwenden. Bei der Einbeziehung der Steckflansche 22, 23 für die Ölsammelleitung ist es weiterhin vorteilhaft, wenn die am ersten und letzten Abgaskrümmer einer Zylinderreihe außenliegenden Stützelemente 39 hohl ausgebildet sind, um zur Einsparung besonderer Leitungen die Ölrückführung zum Kurbelgehäuse 40 zu übernehmen. Zudem besteht auch die Möglichkeit, insbesondere die Versorgungsleitungen für Kühlwasser und Öl zwischen den einzelnen Abgaskrümmern zusätzlich am Kurbelgehäuse 40 mit geeigneten Mitteln abzustützen.

Die Montage bzw. Demontage eines einzelnen Zylinders kann bei dieser Ausgestaltung der Abgaskrümmer in erleichterter Weise durchgeführt werden, da alle Versorgungsleitungen über die Steckverbindungen am Abgaskrümmer bzw. dessen Mantel angeschlossen sind und gegenüber diesem ein schnelles Trennen bzw. Anschließen gestatten.

## Patentanspruch

Abgassystem für eine mehrzylindrige Brennkraftmaschine mit in Reihe angeordneten, einzelnen Zylinderköpfen (3), an die sich vom Kühlwasser der Brennkraftmaschine gekühlte Abgaskrümmer (1) anschließen, die innerhalb eines diesen umgebenden Mantels (2) je einen Kühlwassersammelraum (8) bilden, welche durch Rohrstücke (11, 12) mit Steckanschlüssen (9, 10) zu einer Kühlwassersammelleitung Verbunden sind, wobei den vom Mantel (2) umgebenen Raum Leitungsabschnitte (29) für andere Versorgungsleitungen durchsetzen, die ebenfalls durch angeschlossene Rohrstücke (34, 35) miteinander zu durchgehenden Leitungen verbunden sind, gekennzeichnet durch die Kombination folgender Merkmale :

a) Jeder Abgaskrümmer (1) hat in seinem Mantel (2) einen Sammelraum (20) für das vom Zylinderkopf (3) ablaufende Öl ;

b) die Sammelräume (20) bilden mit den diese miteinander verbindenden Rohrstücken (24, 25) die Ölsammelleitung ;

c) der Ölsammelraum (20) ist durch eine Bohrung (21) o. dergl. unmittelbar mit dem Ventilraum im Zylinderkopf (3) verbunden ;

d) die die Rohrstücke (24, 25) der Ölsammelleitung aufnehmenden Steckflansche (22, 23) sind mit Stützelementen (39) für den Abgaskrümmer (1) und das anschließende Abgassystem (6) versehen, die mit dem Kurbelgehäuse (40) starr oder elastisch verbunden sind und

e) als Ölrückführung zum Kurbelgehäuse dienen die am ersten und letzten Abgaskrümmer (1) einer Zylinderreihe angeordneten Stützelemente (39), die hohl ausgebildet sind.

## Claim

An exhaust gas system for a multi-cylinder internal combustion engine having individual cylinder heads (3) arranged in line, to which the engine jacket-water cooled exhaust elbows (1) are connected, in which each elbow is enveloped by a cooling water collecting space (8) enclosed by a shell (2) ; the water collecting spaces (8) are connected by pipe sections (11, 12) and plug-in sleeves (9, 10) to form a cooling water manifold ; the space enclosed by the shell (2) is passed through by further piping sections (29) for other media, which are also interlinked by pipe sections (34, 35) to form continuous piping systems, characterized by a combination of the following features :

a) each exhaust elbow (1) possesses an oil collecting space (20) within the confines of its shell (2) for oil flowing from the cylinder head (3) ;

b) the oil collecting spaces (20) are connected by pipe sections (24, 25) to form the leakage oil manifold ;

c) the oil collecting space (20) is directly connected to the rocker chamber in the cylinder head (3) through a bore (21), or similar ;

d) the plug-in flanges (22, 23) taking up the pipe sections (24, 25) of the leakage oil manifold are provided with support elements (39) for the exhaust elbows (1) and the exhaust gas system (6) connected thereto, which are rigidly or flexibly connected to the crankcase (40), and

e) in which those support elements (39) which are located at the first and last exhaust elbows (1) are designed hollow and serve to return the leakage oil to the crankcase.

## Revendication

Système d'échappement pour un moteur à combustion interne à plusieurs cylindres en ligne, avec les différentes têtes de cylindre (3) auxquelles sont reliés les coudes d'échappement (1) refroidis par l'eau de refroidissement du moteur à combustion interne, coudes qui forment avec une enveloppe (2) qui les entoure, chaque fois une chambre collectrice d'eau de refroidissement (8), ces chambres étant reliées par des éléments tubulaires (11, 12) à des raccords par enfichage (9, 10) pour former une conduite collectrice d'eau de refroidissement, la chambre entourée par l'enveloppe (2) étant traversée par des segments de conduite (29) pour d'autres conduites d'alimentation qui sont également reliées par des éléments de tube (34, 35) raccordés pour former des conduites traversantes, caracterisé par la combinaison des éléments suivants :

a) chaque coude de tubulure d'échappement (1) a une chambre collectrice (20) dans son enveloppe (2) pour l'huile qui s'écoule de la tête de cylindre (3),

b) les chambres collectrices (20) forment avec les éléments de tube (24, 25) qui les relient, la conduite collectrice d'huile,

c) la chambre collectrice d'huile (20) est reliée par un perçage (21) ou analogue directement à la chambre de soupape d'une tête de soupape (3),

d) les brides d'enfichage (22, 23) qui reçoivent les éléments de tube (24, 25) de la conduite collectrice sont munies d'éléments d'appui (39) pour le coude de gaz d'échappement (1) et le système de gaz d'échappement (6) qui est à raccorder, en étant reliées rigidement ou élastiquement au boîtier de vilebrequin (40),

e) comme retour d'huile vers le carter de vilebrequin, on utilise des éléments d'appui prévus sur le premier et le second coude de tubulure d'échappement (1) d'une rangée de cylindres, éléments d'appui (39) qui sont creux.

Fig.1

*Fig. 2*